# EUROPEAN PATENT APPLICATION

(11) **EP 4 272 853 A1**
(43) Date of publication of application: **08.11.2023**
(21) Application number: 22171284.7
(22) Date of filing: 03.05.2022
(51) Int. Cl.: B01D 35/157, B01D 35/30, B01D 27/08, B01D 27/10, B01D 35/153

(54) **FILTERING DEVICE**

(71) Applicant: BRITA SE, 65232 Taunusstein (DE)
(72) Inventor: BERNARD, Dominik, 55118 Mainz (DE); HUMMEL, Achim, 63628 Bad Soden Salmünster (DE)

(57) **Abstract**

A filtering device (1) for a fluid comprises a rotary valve assembly with a head section (2) and a valve member (4) that is pivotably mounted within the head section (2). The filtering device (1) further comprises a filter cartridge (12) with a cartridge body (13) and a cartridge neck section (14) protruding from the cartridge body (13), wherein the cartridge neck section (14) can be inserted positive locking into the valve member (4) in such a manner as to carry along the valve member (4) within the head section (2) during a pivoting movement of the filter cartridge (12) as well as to provide for a fluid passage from an inlet port (9) through the cartridge body (13) and through an outlet port (10) of the head section (2) in case that the valve member (4) is pivoted into an open position. A positive locking structure comprises at least two cam elements (23) that project radially outwardly from the cartridge neck section (14) that are adapted and configured for a positive locking engagement with matching cam guiding recesses (25) arranged within the valve member (4). A length of the respective cam element (23) is larger than a width of the respective cam element (23).

## Description

### Technical Field

The invention relates to a filtering device for a fluid comprising a rotary valve assembly with a head section and a valve member pivotably mounted within the head section, wherein the head section comprises an inlet port and an outlet port, and wherein the valve member can be pivoted between an open position wherein a fluid may pass through the inlet port and through the outlet port, and a closed position wherein the inlet port and the outlet port are blocked which prevents a fluid from passing through the inlet port and through the outlet port, the filtering device further comprising a filter cartridge with a cartridge body and a cartridge neck section protruding from the cartridge body, wherein the filter cartridge comprises an input opening and an output opening arranged within the cartridge neck section of the filter cartridge that allow for a fluid to flow through the input opening into the cartridge body and after being treated within the cartridge body to flow from the cartridge body through the output opening, wherein the cartridge neck section can be inserted positive locking into the valve member in such a manner as to carry along the valve member within the head section during a pivoting movement of the filter cartridge as well as to provide for a fluid passage from the inlet port through the cartridge body and through the outlet port of the head section in case that the valve member is pivoted into the open position, and wherein a positive locking structure comprises at least two cam elements that project radially outwardly from the cartridge neck section that are adapted and configured for a positive locking engagement with matching cam guiding recesses arranged within the valve member that allow for receiving the cam elements of the cartridge neck section that is inserted into the valve member.

### Background of the invention

Usually, a filtering device that performs a filter treatment for a fluid provides for the passage of the fluid through a filter cartridge which contains a filter medium, wherein the passage of the fluid through the filter medium or along a surface of the filter medium results in a filtering effect that removes unwanted particles or otherwise affects the characteristics of the fluid in the desired manner. Most filter media will not only cause a filtering effect for the fluid, but the filter medium, in turn, will also be affected by the contact with the fluid.

This usually results in the consumption of the filter medium or in a change of the filter medium that reduces the filtering effect of the filter medium that will be performed during the flow of the liquid either through or along the filter medium. Furthermore, a filtering process that removes unwanted particles from the fluid usually results in an unwanted accumulation of said particles at or within the filter medium, which also degrades the efficiency of the filter medium. Thus, most filter cartridges are designed for a replacement of the filter cartridge, which allows for the removal of a spent filter cartridge and for the use of a new or refurbished filter cartridge that contains a previously unused or reprocessed filter medium. Such a replacement after the expiration of a limited service life of the filtering cartridge is preferably performed either after a given period of time or after detection of a significant decrease of the filter effect. For many filtering devices, the replacement of the filter cartridge must be performed manually by a user or by maintenance personnel.

In order to facilitate such a replacement of the filter cartridge, some filtering devices comprise rotary valve assembly with a head section with an input port and with an output port that are connected to a fluid conduit through which the fluid flows. Within the head section there is a valve member that can be pivoted between a closed position that closes the input port and the output port and prevents any unwanted spilling of the fluid from the input port or the output port, and an open position which enables the fluid to flow through the input port and through the output port. A cartridge neck section of the filter cartridge can be inserted into the valve member in a positively locking manner. Thus, a pivoting movement of the filter cartridge that is caused by a user during or after the insertion of the filter cartridge into the valve member results in a forced similar pivoting movement of the valve member together with the filter cartridge. Such a pivotal movement of the filter cartridge together with the valve member can perform the closing or opening of the valve mechanism that closes or opens the input and output port of the filtering device. Thus, no additional manual operations or actuations are required to close or to open the valve mechanism, i.e. to block or to allow for the flow of the fluid through the filter input port and through the output port.

Improper handling of the filter cartridge during the insertion or removal of the filter cartridge may cause damages to the valve member or to the filter cartridge that result in a decrease of efficiency or in a malfunctioning of the filtering device. If a filter cartridge is inserted and used that is not compatible with the filtering system or that does not contain the intended filter medium, this will jeopardize the operation of the filtering system. Also, if a filter cartridge is improperly inserted with a wrong alignment with respect to the valve member, this may also interfere with proper use and operation of the filtering system. Thus, some filter cartridges comprise a key system with several radially protruding structures that are arranged at an outer surface of the cartridge neck section and that must be fitted into corresponding slots or recesses within the valve member. Sometimes, these radially protruding structures extend over a significant part of the circumferential line of the cartridge neck section and also comprise inclined ramp surfaces that interact with corresponding flange parts of the valve member that project inward into an insertion opening of the valve member into which the cartridge neck section must be inserted.

However, many of the radially protruding structures at the outer surface of the cartridge neck section extend over a large section of the circumference of the cartridge neck section and comprise radially protruding structures with a large volume and corresponding space requirements within the valve member that receives and holds the cartridge neck section during operation of the filtering device. Thus, key systems require volume and material accumulated within the cartridge neck section as well as space and a large diameter of the insertion opening of the valve member for receiving the cartridge neck section with such a key system.

Accordingly, there is a need for a filtering device that provides for a safe handling and replacement of a filter cartridge without need for much space of the valve member and without need for large volume key systems arranged at the cartridge neck section of the filter cartridge.

### Summary of the invention

The present invention relates to a filtering device described at the beginning, wherein the at least two cam elements each have a first front face facing away from the cartridge body and a second front face facing towards the cartridge body, and in that n length of the respective cam element that is defined by an axial distance along an axial direction of the cartridge neck section between the first front face and the second front face is larger than a width of the respective cam element along a circumferential line of the cartridge neck section. Such cam elements that only extend over a small section of the circumference of the cartridge neck section do not require much space or neck section material. Two cam elements that are not arranged in a rotational symmetric manner at the cartridge neck section are sufficient to force a preset clear alignment of the filter cartridge with the cartridge neck section within the valve member. Such cam elements are simple and cost-effective during manufacture of the filter cartridge. Furthermore, due to many different positions that are available for such cam elements along the circumference of the cartridge neck section, it is easily possible to provide for many different combinations of cam element positions that result in a manifold of different matching solutions for the key system that is formed by the at least two cam elements and the matching cam guiding recesses within the valve member.

According to a preferred embodiment, for at least some of the at least two cam elements the length is more than three times the width of the respective cam element, and preferably more than five times the width of the respective cam element. Such elongated cam elements form a correspondingly elongated positive locking of the cam elements with the matching cam guiding recesses that extend over a large axial distance of the cartridge neck section. This supports and provides for an enhanced axial stability of the cartridge neck section that is inserted through the insertion opening into the valve member. A large distance between the first front face and the second front face at an opposing end of the cam element results in a long lever arm along the axial direction for the positive locking of the cam element with the matching cam guiding recess. The longer the long lever arm of the positive locking, the better the axial stability of the cartridge neck section that is inserted into the valve member. Furthermore, cam elements with a large extension in the axial direction allow for an efficient force transmission during a pivotal movement of the filter cartridge with the cartridge neck section that is inserted into the valve member, even though a radially outward extension of the cam element is low.

According to an aspect of the invention, at least some of the at least two cam elements are formed by continuous ridges projecting radially outwardly and running along an axial direction. Such continuous ridges that run along a straight line along the axial direction allow for a very simple manufacture e.g. by injection molding without need for complex molding tools, but allowing for a particular easy demolding. Furthermore, such continuous ridges can be easily manufactured by inserting ridge elements into the molding tools before injecting the cartridge neck material. The ridge elements can be made of metal or of another rigid material that is different from the cartridge neck material that is used for the injection molding of a filter cartridge housing with the cartridge neck section.

According to an embodiment of the invention, all of the at least two cam elements are formed by continuous ridges of equal length. However, the position along the circumference of the cartridge neck section can be used to differ between different filter cartridges and to ensure proper alignment of the respective filter cartridge with respect to the valve member within the head section of the filtering device.

In yet another embodiment of the invention, all of the at least two cam elements are formed by continuous ridges, wherein at least two cam elements are of different length. Cam elements with different length increase the number of different possibilities that can be differentiated by the design of the cam elements that form the key system. Furthermore, cam elements with a different distance of the second front face can be arranged and adapted to form an inclined ramp that interacts with a matching inclined ramp surface of a flange that protrudes inward into the insertion opening of the valve member. Such an inclined ramp structure can be used to force an axial movement of the filter cartridge during a pivotal movement of the filter cartridge, resulting in an additional insertion movement of the cartridge neck section into the valve member when the filter cartridge and the valve member are pivoted from the closed position to the open position of the valve member, i.e. during insertion of a new or refurbished filter cartridge into the head section of the filtering device. Such an axial movement of the cartridge neck section through the insertion opening and into the valve member can be used to ensure a proper positioning of the cartridge neck section within the valve member, and to make it harder for any unwanted detachment and removal of the filter cartridge from the valve member. Furthermore, such an axial movement into the valve member can be used e.g. for providing a tight sealing of the transition between the input port of the head section and the corresponding input opening of the filter cartridge that is inserted into the valve member by creating additional pressure onto a sealing element.

The orientation of the continuous ridges that form the cam elements can be solely along the axial direction. It is also possible that the orientation of the continuous ridges forms an angle with the axial direction. Furthermore, the course of the continuous ridges can either run along a straight line or the course can be curved.

According to another favorable aspect of the invention, at least some of the at least two cam elements are formed by a first projection and a second projection that are spaced apart from each other in an axial direction, wherein a distance along an axial direction between a first front face of the first projection and a second front face of the second projection define the length of the respective cam element, and wherein a larger diameter of the two projections defines the width of the respective cam element. Thus, these cam elements are not formed by continuous cam ridges, but by two or more separate projections that are arranged at a distance towards each other. Even though the axial distance between the first front face of a first projection and the second front face of a second projection can be large and e.g. extend over more than half or three quarters of the axial length of the cartridge neck section, the total volume that is required for the two projections is very small and much smaller than the volume of a continuous ridge that extends over the same length. Making use of two or more separate projections instead of one continuous ridge saves cartridge neck material and space requirements, but provides for a similarly effective positive locking of the cartridge neck section within the valve member as well as for a similarly effective axial stability and circumferential force transmission of the cartridge neck section that is inserted into the valve member.

According to alternative embodiments of the invention, a cross-sectional area of the first projection and of the second projection has a circular shape, an elliptical shape or a symmetric polygonal shape. The projections can be shaped e.g. like a hemisphere or a rod that protrudes radially outward from the surface of the cartridge neck section. Preferably, the at least two cam elements are unevenly spaced along a circumferential line of the cartridge neck section in such a manner as to ensure a definite alignment of the cartridge neck section within the valve member.

As mentioned before and according to a favorable aspect of the invention, the head section of the filtering device comprises at least one cam ramp that projects radially inwards into a central aperture of the head section through which the cartridge neck section can be inserted into the head section and the valve member within the head section, wherein the second front face of at least one cam element of the cartridge neck section of the filter cartridge that is fully inserted into the valve member interacts with an inclined cam ramp surface in such a manner as to provide for an axial movement of the filter cartridge towards the head section during a pivoting movement of the filter cartridge that pivots the valve member into the open position.

### Brief description of the drawings

The present invention will be more fully understood, and further features will become apparent, when reference is made to the following detailed description and the accompanying drawings. The drawings are merely representative and are not intended to limit the scope of the claims. In fact, those of ordinary skill in the art may appreciate upon reading the following specification and viewing the present drawings that various modifications and variations can be made thereto without deviating from the innovative concepts of the invention. Like parts depicted in the drawings are referred to by the same reference numerals.
Figure 1 illustrates a filtering device comprising a head section with a valve member and further comprising a filter cartridge that can be inserted into the valve member within the head section, wherein the valve member is in a closed position,
Figure 2 illustrates the head section of the filtering device shown in Figure 1, wherein the valve member is in an open position,
Figure 3 illustrates an exemplary arrangement of two cam elements at a cartridge neck section, wherein the two cam elements are each formed by a continuous ridge with different length,
Figures 4a to 4c illustrate a front view, a back view and a top view of a total of four cam elements arranged at a cartridge neck section,
Figures 5a to 5c illustrate a front view, a back view and a top view of another embodiment of a total of two cam elements arranged at a cartridge neck section,
Figures 6a to 6c illustrate a front view, a back view and a top view of another embodiment of a total of two cam elements arranged at a cartridge neck section,
Figure 7 illustrates an exemplary arrangement of two cam elements at a cartridge neck section, wherein the two cam elements are each formed by a continuous ridge with identical length,
Figures 8a to 8c illustrate a front view, a back view and a top view of a total of four cam elements arranged at a cartridge neck section,
Figures 9a to 9c illustrate a front view, a back view and a top view of another embodiment of a total of two cam elements arranged at a cartridge neck section,
Figures 10a to 10c illustrate a front view, a back view and a top view of another embodiment of a total of two cam elements arranged at a cartridge neck section,
Figure 11 illustrates an exemplary arrangement of two cam elements at a cartridge neck section, wherein the two cam elements are each formed by two protrusions arranged at a different distance towards each other,
Figures 12a to 12c illustrate a front view, a back view and a top view of a total of four cam elements each formed by two protrusions arranged at a different distance towards each other at a cartridge neck section,
Figure 13 illustrates an exemplary arrangement of two cam elements at a cartridge neck section, wherein the two cam elements are each formed by two protrusions arranged at an equal distance towards each other,
Figures 14a to 14c illustrate a front view, a back view and a top view of another embodiment of a total of two cam elements each formed by two protrusions arranged at an equal distance towards each other at a cartridge neck section.

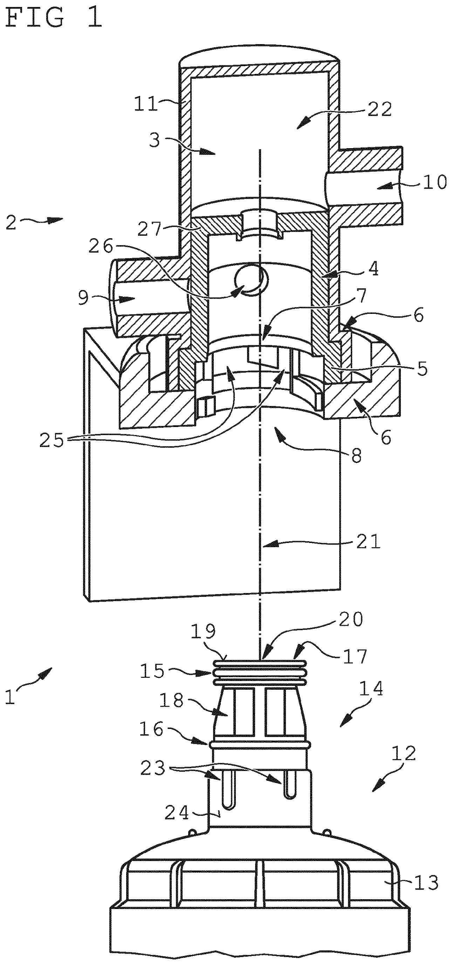

Figure 1 illustrates an exemplary embodiment of a filtering device 1. The filtering device 1 comprises a head section 2 that can be mounted e.g. at a wall or within a cupboard that is not shown in Figure 1. The head section 2 comprises a hollow interior 3 with approximately cylindrical shape. A valve member 4 is pivotably mounted within the hollow interior 3 of the head section 2. A flange 5 of the valve member 4 projects radially outward and engages with a flange receiving structure 6 of the head section 2, which fixes the valve member 4 within the hollow interior 3 of the head section 2. An insertion opening 7 of the valve member 4 is arranged congruent with a central aperture 8 of the head section 2. The head section 2 also comprises an inlet port 9 and an outlet port 10 that are arranged at opposite sides of a cylindrical housing 11 of the head section 2 that encloses the pivotably mounted valve member 4 within the hollow interior 3 of the head section 2. The inlet port 9 and the outlet port 10 can be connected to a fluid conduct.

The filtering device 1 also comprises a filter cartridge 12 with a cartridge body 13 and with a cartridge neck section 14 that protrudes from the cartridge body 13. All Figures only show an upper part of the cartridge body 13 and the cartridge neck section 14. The cartridge neck section 14 comprises two annular sealing elements 15, 16 that are arranged at a distance to each other at an outward end 17 of the cartridge neck section 14 that faces away from the cartridge body 13. In between the two annular sealing elements 15, 16 there is an inlet opening 18 of the filter cartridge 12. At a front face 19 of the cartridge neck section 14 that faces away from the cartridge body 13 there is an outlet opening 20 of the filter cartridge 12. A fluid can enter through the inlet opening 18 into the filter cartridge 12 and then flow through the cartridge body 13 that is filled with a filter medium. The fluid that flows through the cartridge body 13 will be treated by the filter medium that is stored within cartridge body 13. Afterwards, the filtered fluid can exit the filter cartridge 12 through the outlet opening 20.

The diameter and shape of the cartridge neck section 14 is adapted to the insertion opening 7 of the valve member 4 in such a manner that the cartridge neck section 14 of the filter cartridge 12 can be inserted into the insertion opening 7 of the valve member 4 by an axial movement of the filter cartridge 12 along the axial direction that is schematically indicated by a dashed line 21. After the cartridge neck section 14 is fully inserted into the insertion opening 7 of the valve member 4, the two annular sealing elements 15, 16 are positioned at opposite sides of the inlet port 9 of the head section 2 and prevent any fluid that enters through the inlet port 9 to leak into neighboring parts of the valve member 4 and into the hollow interior 3 of the head section 2. The fluid that enters through the inlet port 9 then flows through the inlet opening 18 of the filter cartridge 12 and into the cartridge body 13. After the filtering treatment within the cartridge body 13 the filtered fluid exits the filter cartridge 12 through the outlet opening 20 into an end region 22 of the hollow interior 3 of the head section 2 and then exits the head section 2 of the filtering device 1 through the outlet port 10.

Two or more radially outwardly protruding cam elements 23 are arranged at an outer surface 24 of the cartridge neck section 14. The cam elements 23 are unevenly spaced along a circumferential line along the cartridge neck section 14. The position of the cam elements 23 is adapted to match the position of cam guiding recesses 25 that are arranged within the insertion opening 7 next to the central aperture 8 of the head section 2. The cartridge neck section 14 of the filter cartridge 12 can only be inserted into the insertion opening 7 if the alignment of the cam elements 23 matches the position of the cam guiding recesses 25. During and after insertion of the cartridge neck section 14 into the valve member 4, each of the cam elements 23 engage with a corresponding cam guiding recess 25, and each of the cam elements 23 provides for a positive locking with the corresponding cam guiding recess 25. The unevenly spaced position of the cam elements 23 along the circumferential line of the cartridge neck section 14 forces a definitive alignment of the cartridge neck section 14 of the filter cartridge 12 within the valve member 4. A filter cartridge that is not suitable and thus not intended for use with the filtering device 1 will not have matching cam elements 23 at the correct positions along the circumferential line that matches the cam guiding recesses 25 within the valve member 4. Such a non-fitting filter cartridge 12 cannot be inserted into the valve member 4.

Figure 1 shows the valve member 4 in a closed position. An input passage opening 26 within a wall section 27 of the valve member 4 does not overlap with the inlet port 9 of the head section 2. Any passage of fluid through the inlet port 9 is blocked by the wall section 27 of the valve member 4.

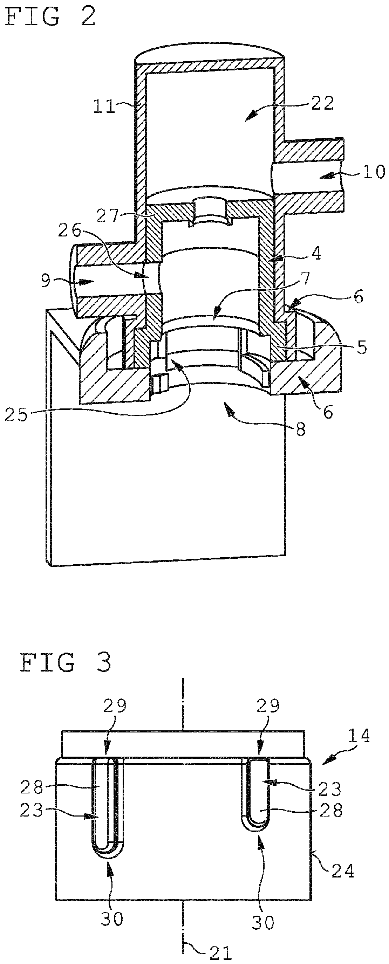

Figure 2 shows the valve member 4 in an open position. The input passage opening 26 within the wall section 27 fully overlaps with the inlet port 9 and allows for the passage of the fluid through the inlet port 9 into the valve member 4 and into the inlet opening 18 of the filter cartridge 12, wherein the filter cartridge 12 is not shown in Figure 2. The fluid that exits the filter cartridge 12 through the outlet opening 21 then exits the interior 3 of the head section 2 through the outlet port 10.

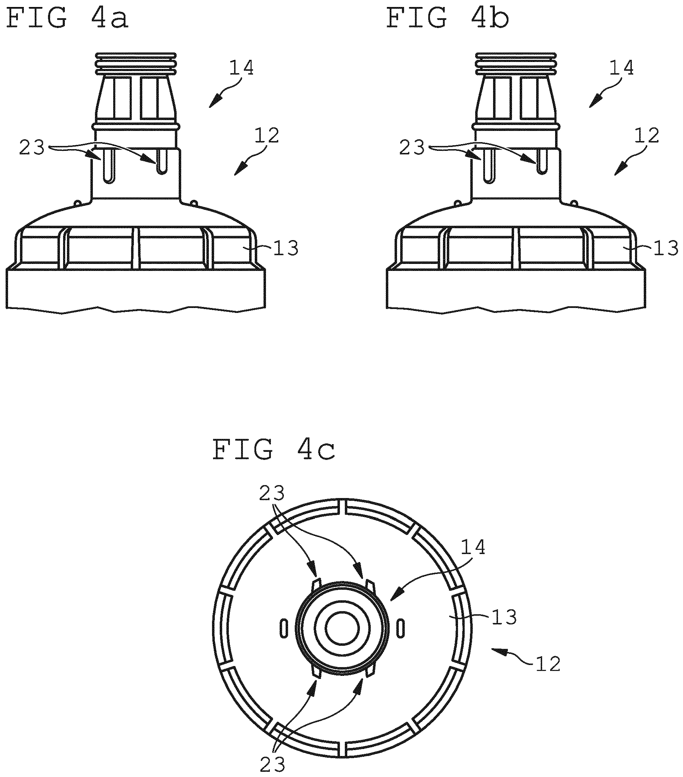

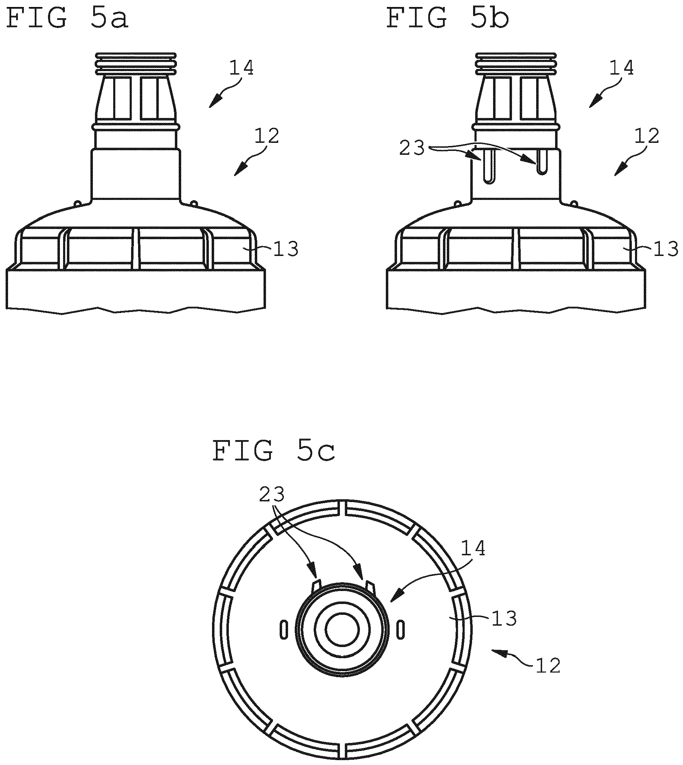

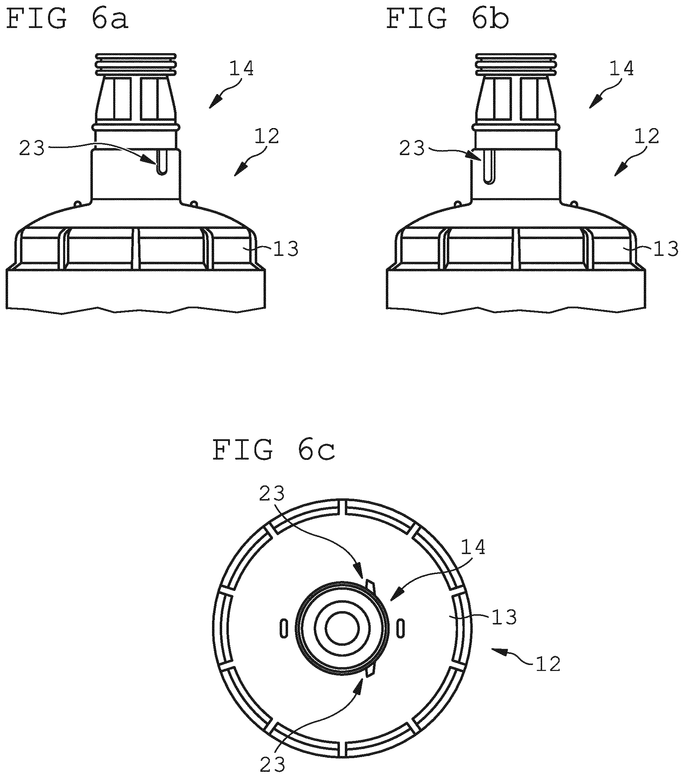

Figures 3 to 6c illustrate some exemplary embodiments of cam elements 23 that are formed by continuous ridges 28. All continuous ridges 28 run along a straight line and are aligned along the axial direction 21. Each of the cam elements 23 has a first front face 29 that faces away from the cartridge body 13 and a second front face 30 that opposes the first front face 29 and that faces towards the cartridge body 13. The axial distance between the first front face 29 and the second front face 30 of each cam element 23 is larger than the extension of the cam element 23 along the circumferential line of the cartridge neck section 14. All embodiments shown in Figures 3 to 6c comprise at least two cam elements 23 with different length along the axial direction 21. The embodiment shown in Figures 4a to 4c comprises four cam elements 23 unevenly spaced along the circumferential line of the cartridge neck section 14. The embodiment shown in Figures 5a to 5c comprises only two cam elements 23 that are both arranged on a front side of the filter cartridge 12. The embodiment shown in Figures 6a to 6c comprises two cam element 23 that are arranged one at a front side and one at a back side of the filter cartridge 12.

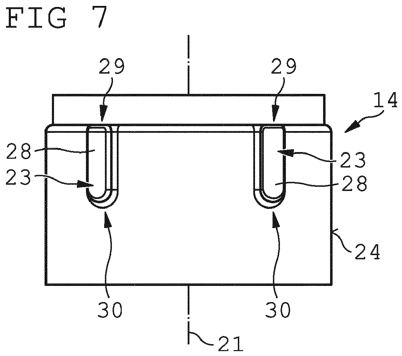

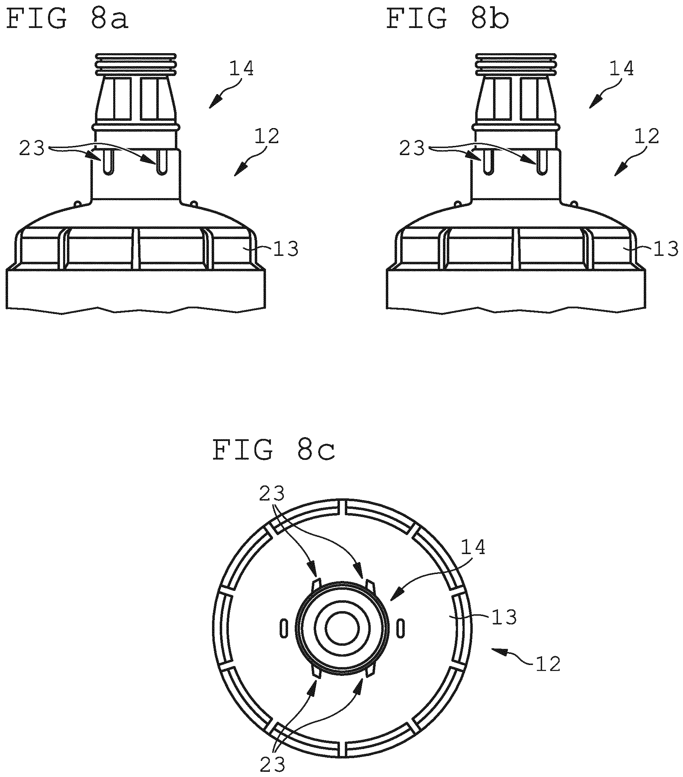

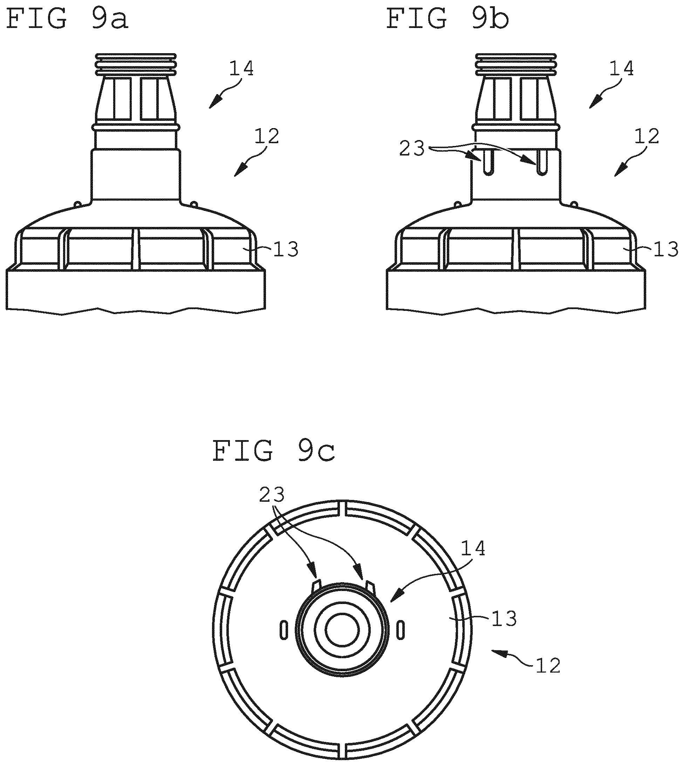

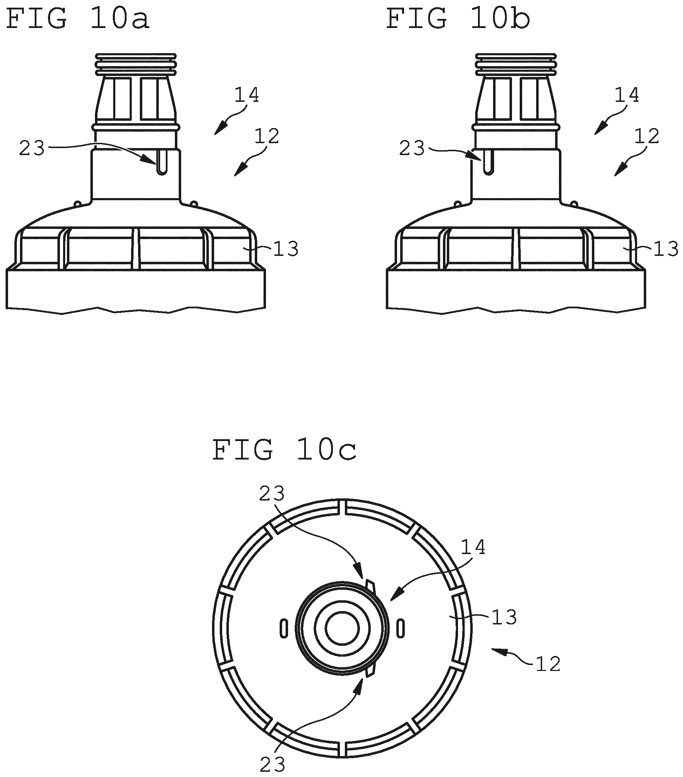

Figures 7 to 10c illustrate some exemplary embodiments similar to the embodiments shown in Figures 3 to 6c, but with cam elements 23 that are formed by continuous ridges 28 with the same length each. All continuous ridges 28 run along a straight line and are aligned along the axial direction 21. Each of the cam elements 23 has a first front face 29 that faces away from the cartridge body 13 and a second front face 30 that opposes the first front face 29 and that faces towards the cartridge body 13. The axial distance between the first front face 29 and the second front face 30 of each cam element 23 is larger than the extension of the cam element 23 along the circumferential line of the cartridge neck section 14. All embodiments shown in Figures 7 to 10c comprise at least two cam elements 23 with equal length along the axial direction 21. The embodiment shown in Figures 8a to 8c comprises four cam elements 23 unevenly spaced along the circumferential line of the cartridge neck section 14. The embodiment shown in Figures 9a to 9c comprises only two cam elements 23 that are both arranged on a front side of the filter cartridge 12. The embodiment shown in Figures 9a to 9c comprises two cam element 23 that are arranged one at a front side and one at a back side of the filter cartridge 12.

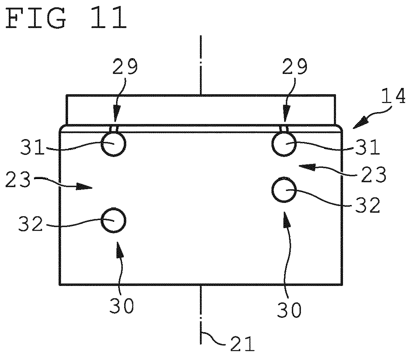

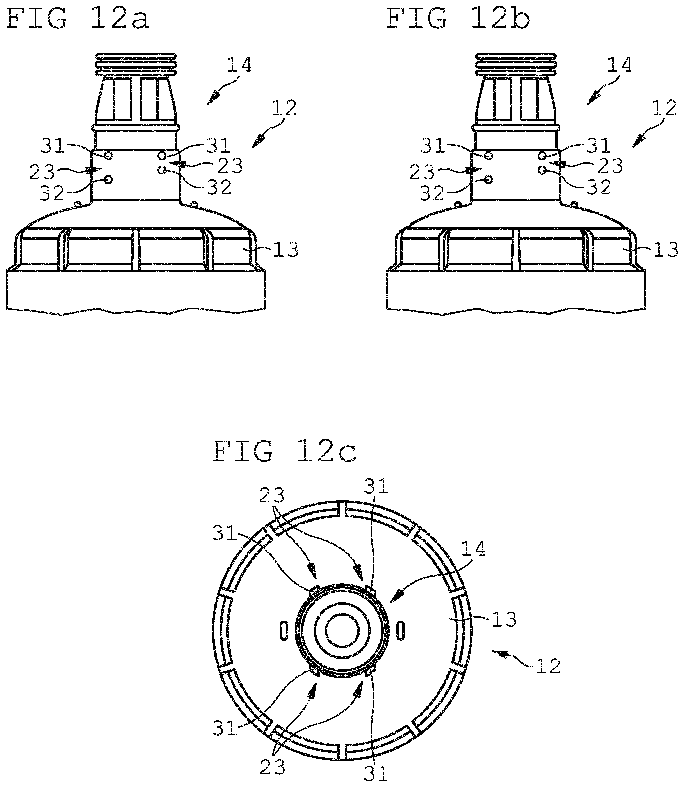

Figure 11 illustrates an exemplary arrangement of two cam elements 23 at the cartridge neck section 14, wherein the two cam elements 23 are each formed by two protrusions 31, 32 that are arranged at a different distance towards each other. For each cam element 23, the two protrusions 31, 32 are aligned along the axial direction 21. Each protrusion 31, 32 has a circular footprint with a diameter that is large enough to avoid unwanted damaging of the protrusion 31, 32 during normal handling and operation of the filter cartridge 12. The axial distance along the axial direction 21, i.e. the axial distance between the first front face 29 of the first protrusion 31 and the second front face 30 of the second protrusion 32, wherein the first and second front face 29, 30 are facing away from each other, is at least equal to or larger than twice the diameter of the two protrusions. This axial distance that equals the length of the corresponding cam element 23 is approx. three times the diameter for a short cam element 23 that is shown in Figure 11 at the right side of the cartridge neck section 14, and is approx. four times the diameter for a longer cam element 23 that is shown in Figure 11 at the left side of the cartridge neck section 14. The embodiment shown in Figures 12a to 12c comprise four cam elements 23 unevenly spaced along the circumferential line of the cartridge neck section 14. The cam elements 23 have two different lengths as shown in Figure 11.

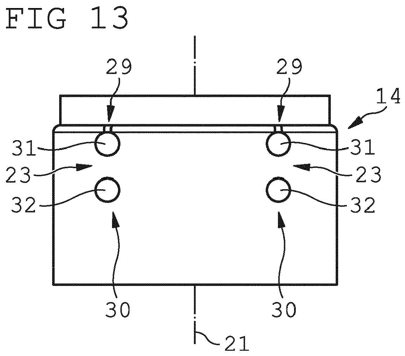

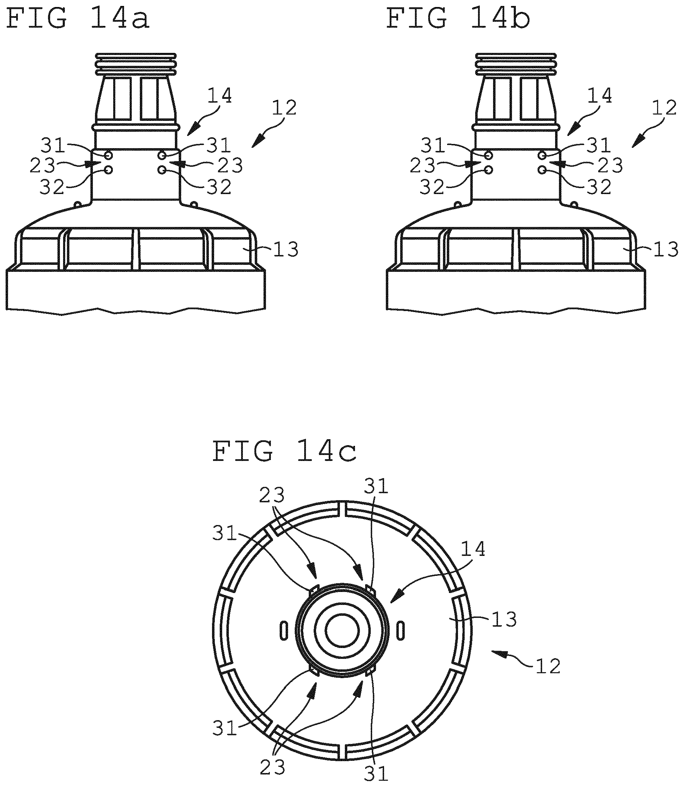

Figure 13 illustrates an exemplary arrangement of two cam elements 23 at the cartridge neck section 14, wherein the two cam elements 23 are each formed by two protrusions 31, 32 that are arranged at an equal distance towards each other. For each cam element 23, the two protrusions 31, 32 are aligned along the axial direction 21. Each protrusion 31, 32 has a circular footprint with a diameter that is large enough to avoid unwanted damaging of the protrusion 31, 32 during normal handling and operation of the filter cartridge 12. The axial distance along the axial direction 21, i.e. the axial distance between the first front face 29 of the first protrusion 31 and the second front face 30 of the second protrusion 32, wherein the first and second front face 29, 30 are facing away from each other, is at least equal to or larger than twice the diameter of the two protrusions. This axial distance that equals the length of the corresponding cam element 23 is approx. three times the diameter for each of the cam elements 23 that is shown in Figure 13. The embodiment shown in Figures 14a to 14c comprise four cam elements 23 unevenly spaced along the circumferential line of the cartridge neck section 14. All cam elements 23 have equal length as shown in Figure 13.

## Claims

1. Filtering device (1) for a fluid comprising a rotary valve assembly with a head section (2) and a valve member (4) pivotably mounted within the head section (2), wherein the head section (2) comprises an inlet port (9) and an outlet port (10), and wherein the valve member (4) can be pivoted between an open position wherein a fluid may pass through the inlet port (9) and through the outlet port (10), and a closed position wherein the inlet port (9) and the outlet port (10) are blocked which prevents a fluid from passing through the inlet port (9) and through the outlet port (10), the filtering device (1) further comprising a filter cartridge (12) with a cartridge body (13) and a cartridge neck section (14) protruding from the cartridge body (13), wherein the filter cartridge (12) comprises an input opening (18) and an output opening (20) arranged within the cartridge neck section (14) of the filter cartridge (12) that allow for a fluid to flow through the input opening (18) into the cartridge body (13) and after being treated within the cartridge body (13) to flow from the cartridge body (13) through the output opening (20), wherein the cartridge neck section (14) can be inserted positive locking into the valve member (4) in such a manner as to carry along the valve member (4) within the head section (2) during a pivoting movement of the filter cartridge (12) as well as to provide for a fluid passage from the inlet port (9) through the cartridge body (13) and through the outlet port (10) of the head section (2) in case that the valve member (4) is pivoted into the open position, and wherein a positive locking structure comprises at least two cam elements (23) that project radially outwardly from the cartridge neck section (14) that are adapted and configured for a positive locking engagement with matching cam guiding recesses (25) arranged within the valve member (4) that allow for receiving the cam elements (23) of the cartridge neck section (14) that is inserted into the valve member (4), **characterized in that** the at least two cam elements (23) each have a first front face (29) facing away from the cartridge body (13) and a second front face (30) facing towards the cartridge body (13), and **in that** a length of the respective cam element (23) that is defined by an axial distance along an axial direction (21) of the cartridge neck section (14) between the first front face (29) and the second front face (30) is larger than a width of the respective cam element (23) along a circumferential line of the cartridge neck section (14).

2. Filtering device (1) according to claim 1, **characterized in that** for at least some of the at least two cam elements (23) the length is more than three times the width of the respective cam element (23), and preferably more than five times the width of the respective cam element (23).

3. Filtering device (1) according to claim 1, **characterized in that** at least some of the at least two cam elements (23) are formed by continuous ridges (28) projecting radially outwardly and running along an axial direction (21).

4. Filtering device (1) according to claim 3, **characterized in that** all of the at least two cam elements (23) are formed by continuous ridges (28) of equal length.

5. Filtering device (1) according to claim 3, **characterized in that** all of the at least two cam elements (23) are formed by continuous ridges (28), wherein at least two cam elements (23) are of different length.

6. Filtering device (1) according to one of the preceding claims 1 to 3, **characterized in that** at least some of the at least two cam elements (23) are formed by a first projection (31) and a second projection (32) that are spaced apart from each other in an axial direction (21), wherein a distance along the axial direction (21) between a first front face (29) of the first projection (31) and a second front face (30) of the second projection (32) define the length of the respective cam element (23), and wherein a larger diameter of the two projections (31, 32) defines the width of the respective cam element (23).

7. Filtering device (1) according to claim 6, **characterized in that** a cross-sectional area of the first projection (31) and of the second projection (32) has a circular shape or a symmetric polygonal shape.

8. Filtering device (1) according to one of the preceding claims, **characterized in that** the at least two cam elements (23) are unevenly spaced along a circumferential line of the cartridge neck section (14) in such a manner as to ensure a definite alignment of the cartridge neck section (14) within the valve member (4).

9. Filtering device (1) according to one of the preceding claims, **characterized in that** the head section (2) of the filtering device (1) comprises at least one cam ramp that projects radially inwards into a central aperture (8) of the head section (2) through which the cartridge neck section (14) can be inserted into the head section (2) and the valve member (4) within the head section (2), wherein the second front face (29) of at least one cam element (23) of the cartridge neck section (14) of the filter cartridge (12) that is fully inserted into the valve member (4) interacts with an inclined cam ramp surface in such a manner as to provide for an axial movement of the filter cartridge (12) towards the head section (2) during a pivoting movement of the filter cartridge (12) that pivots the valve member (4) into the open position.
